# EUROPÄISCHE PATENTSCHRIFT

(11) **EP 1 167 858 B1**
(45) Veröffentlichungstag und Bekanntmachung des Hinweises auf die Patenterteilung: **06.10.2004**
(21) Anmeldenummer: 01110710.9
(22) Anmeldetag: 03.05.2001
(51) Int. Cl.: F16L 57/00, B65G 53/52

(54) **Rohrbogen zum Transport von abrasiven Materialien**
Pipe bend for transport of abrasive materials
Coude de tuyau pour le transport de matières abrasives

(30) Priorität: 01.07.2000 DE 10032074; 29.07.2000 EP 00116455
(43) Veröffentlichungstag der Anmeldung: 02.01.2002
(73) Patentinhaber: Esser -Werke GmbH & Co. KG, 59581 Warstein (DE)
(72) Erfinder: Esser, Alexander, 59581 Warstein (DE)
(74) Vertreter: Ksoll, Peter, Dr.-Ing.

(56) Entgegenhaltungen:
- DE-A- 3 524 757
- DE-A- 19 809 529
- DE-C- 19 500 952
- GB-A- 1 336 397
- US-A- 4 995 427
- US-A- 5 275 440
- PATENT ABSTRACTS OF JAPAN vol. 1997, no. 10, 31. Oktober 1997 (1997-10-31) & JP 09 152087 A (NAISU KK;NIPPON STEEL CORP; KORANSHA CO LTD), 10. Juni 1997 (1997-06-10)

## Beschreibung

Die Erfindung betrifft einen Rohrbogen als Bestandteil eines Rohrstrangs zum Transport von abrasiven Materialien gemäß den Merkmalen im Oberbegriff des Anspruchs 1.

Der Transport von abrasiven Materialien, wie z.B. Sand oder aber insbesondere Beton, stellt an die dazu eingesetzten Rohrstränge aus einzelnen Rohrschüssen hohe Anforderungen. Auf der einen Seite sollen die Rohrschüsse und hier insbesondere die in den Rohrstrang mit verschiedenen Krümmungen eingegliederten Rohrbögen hinsichtlich ihrer inneren Oberflächen einen hohen Verschleißwiderstand gewährleisten. Auf der anderen Seite müssen jedoch die Rohrschüsse zur Umgebung hin vom Werkstoff her so ausgebildet sein, dass sie Aufprall- und Schlagbeanspruchungen ohne Rissbildung widerstehen. Mit anderen Worten ausgedrückt, die Rohrschüsse sollen innen hart und außen weich sein. Um diesen beiden konträren Anforderungen an die Rohrschüsse als Bestandteile eines Rohrstrangs zu genügen, hat man gemäß z.B. der DE 198 09 529 A1 die Rohrschüsse zweilagig ausgebildet. Die Innenlagen wurden zumindest über einen wesentlichen Teil ihrer radialen Dicke gehärtet, während die Außenlagen aus einem schweißbaren Stahl hergestellt wurden. Hiermit wurde auch dem Umstand Rechnung getragen, dass die Außenlagen endseitig mit Kupplungsbunden verbunden wurden, die dem Anschluss zweier in einem Rohrstrang aufeinander folgender Rohrschüsse dienten. Diese Kupplungsbunde waren so ausgebildet, dass ihre Stirnseiten im rechten Winkel zu den Längsachsen verliefen, so dass bei einem Verschleiß eines einzelnen Rohrschusses dieser nach dem Entfernen der entsprechenden, in der Regel zweiteiligen, Kupplungsschellen für sich radial aus dem Rohrstrang entfernt und durch einen neuen Rohrschuss ersetzt werden konnte, ohne dass für einen solchen Austausch der Rohrstrang axial auseinander gezogen werden musste.

Die vorstehend beschriebene Ausführungsform hat sich in der Praxis bei geradlinigen Rohrschüssen im Großen und Ganzen bewährt. Problematisch sind jedoch nach wie vor die Rohrbögen in einem Rohrstrang, insbesondere deshalb, weil sie bei der Veränderung der Strömungsrichtung des transportierten Materials deutlich erhöhten Verschleißbeanspruchungen ausgesetzt sind.

Die endseitigen Kupplungsbunde solcher Rohrbögen bestehen bei einer zum Stand der Technik zählenden Bauart jeweils aus einem Außenring mit einer umlaufenden äußeren Kupplungsnute und einem im Außenring angeordneten Innenring aus einem gegenüber dem Material des Außenrings verschleißfesteren Material. Die Innenringe sind im bekannten Fall lediglich zu den Stirnseiten der Rohrbögen hin gegen eine axiale Verlagerung gesichert. Da die inneren Bestandteile der in Rede stehenden Rohrbögen, d.h. die Innenringe und die Innenlagen, aufgrund der nicht zu vermeidenden Herstellungstoleranzen mit relativem Spiel einander zugeordnet sind, können durch den Druck der zu transportierenden Materialien die jeweils in Strömungsrichtung hinten liegenden Innenringe zusammen mit den Innenlagen in Richtung zu den in Strömungsrichtung vorderen Innenringen verschoben werden. Aufgrund dessen addieren sich die toleranzbedingt vorab vorhandenen Spalte zwischen den in Strömungsrichtung des Materials hinteren Innenringen und den Innenlagen zu breiten Spalten zwischen zwei aufeinander folgenden Rohrbögen. Sie beeinträchtigen die Lebensdauer der Rohrbögen mit den in Strömungsrichtung verschobenen Innenteilen in einem erheblichen Umfang.

Des Weiteren muss der Umstand beachtet werden, dass bei einem Verschleiß einer Dichtung zwischen zwei Rohrbögen die Dichtung ausgewechselt werden muss. Wechselt nun der Monteur den in Strömungsrichtung hinteren Rohrbogen und baut ihn dann umgekehrt wieder ein, so wird der Spalt zwischen den beiden Rohrbögen noch mehr verbreitert, da sich die in Strömungsrichtung verschobenen Innenteile in ihrer verschobenen Lage durch die Materialien festzementiert haben. Hierdurch vergrößert sich die Verschleißproblematik im Übergangsbereich von einem Rohrbogen auf den benachbarten Rohrbogen noch mehr.

Im Umfang der DE 195 00 952 C1 hat man einen Rohrbogen zur Eingliederung in einen Rohrstrang vorgeschlagen, der zwischen endseitigen Kupplungsflanschen ein eingeschweißtes Mantelrohr aus einem schweißbaren Stahl aufweist. Im Mantelrohr ist eine Schleißeinlage aus einem verschleißfesten Werkstoff vorgesehen. Die Schleißeinlage ist durch mindestens ein in dem dem Krümmungsmittelpunkt des Rohrbogens abgewandten Bereich angeordnetes und zwischen den Kupplungsflanschen eingespanntes äußeres Schalensegment halbkreisförmigen Querschnitts gebildet. Die Schenkelstirnseiten des äußeren Schalensegments erstrecken sich in der in der Längsachse des kreisförmigen Transportquerschnitts verlaufenden zum Krümmungsmittelpunkt senkrechten Mittellängsebene. In dem dem Krümmungsmittelpunkt zugewandten Bereich des Rohrbogens ist ein zwischen den Kupplungsflanschen eingespanntes inneres Schalensegment halbkreisförmigen Querschnitts im radialen Abstand zum Mantelrohr vorgesehen, dessen Schenkelstirnseiten sich in der Mittellängsebene erstrecken. Die Wanddicke des inneren Schalensegments ist geringer als die des äußeren Schalensegments.

Femer ist es im Umfang der GB 1 336 397 A bekannt, von außen zwischen einer Innenlage und einer Außenlage eines Rohrbogens einen wärmeisolierenden Füllstoff einzubringen.

Der Erfindung liegt - ausgehend vom Stand der Technik - die Aufgabe zugrunde, einen Rohrbogen als Bestandteil eines Rohrstrangs zum Transport von abrasiven Materialien, wie z.B. Sand oder Beton, zu schaffen, der den gestellten Anforderungen an hohe Verschleißfestigkeit und leichte Auswechselbarkeit bei einfacher Herstellung noch besser genügt.

Diese Aufgabe wird mit den Merkmalen im kennzeichnenden Teil des Anspruchs 1 gelöst.

Ein derartiger Rohrbogen besitzt zwischen den beiden endseitigen Kupplungsbunden aus jeweils einem eine umlaufende äußere Kupplungsnute aufweisenden Außenring und einem demgegenüber verschleißfesteren Innenring neben einem mit den beiden Außenringen verschweißten Mantelbogen einen gegenüber diesem aus einem verschleißfesteren Werkstoff bestehenden umfangsseitig geschlossenen Innenbogen. Dieser Innenbogen ist unter radialer Abstützung am Mantelbogen mit Bildung eines Ringraums an beiden Enden hinsichtlich seines Innenquerschnitts zu den Innenquerschnitten der Innenringe koaxial ausgerichtet. Der Ringraum wird durch einen aushärtenden Kunststoff befüllt. Dadurch, dass sowohl in radialer Richtung zum Mantelbogen als auch in axialer Richtung zu den Innenringen der Kupplungsbunde jeweils ein vergleichsweise großer Abstand vorhanden ist, kann der Innenbogen unter Berücksichtigung aller herstellungsbedingten Ungenauigkeiten dennoch problemlos so in den Mantelbogen integriert werden, dass die endseitigen Innenquerschnitte des Innenbogens einwandfrei koaxial auf die Innenquerschnitte der Innenringe der Kupplungsbunde ausgerichtet sind. Auf diese Weise werden radiale Versetzungen oder Absätze zwischen dem Innenbogen und den Innenringen vermieden, die einer erhöhten Verschleißbeanspruchung ausgesetzt wären und damit die Standzeit des Rohrbogens verkürzen würden.

Die exakte Ausrichtung der endseitigen Innenquerschnitte des Innenbogens auf die Innenquerschnitte der Innenringe kann insbesondere dadurch bewirkt werden, dass von den Stirnseiten des Rohrbogens her Zentrierstempel in die Kupplungsbunde eingeführt werden. Danach erfolgt die radiale Abstützung des Innenbogens am Mantelbogen. Wenn anschließend die Zentrierstempel wieder entfernt worden sind, ist eine perfekte Ausrichtung des Innenbogens auf die Innenringe der Kupplungsbunde gewährleistet. Aufgrund dieser Maßnahme kann auch dem Sachverhalt Rechnung getragen werden, dass der erfindungsgemäße Rohrbogen kein höheres Gewicht gegenüber bekannten Rohrbögen haben soll. Die Standzeit eines solchen Rohrbogens wird somit beträchtlich verlängert.

Dadurch, dass nunmehr sowohl die Innenringe in den Außenringen der Kupplungsbunde als auch der Innenbogen im Mantelbogen durch den aushärtenden Kunststoff eindeutig lagefixiert sind, kann keine Verlagerung der Innenteile eines Rohrbogens aufgrund des Drucks des transportierten Materials mehr erfolgen. Neben dem höheren Verschleißwiderstand an den Enden eines Rohrbogens ist auch bei einem Austausch oder einem Dichtungswechsel selbst bei einem um 180° verdreht eingebauten Rohrbogen kein Nachteil im Hinblick auf eine größere Spaltbildung und damit einen stärkeren Verschleiß zu erwarten.

Zur radialen Abstützung des Innenbogens am Mantelbogen unter Ausbildung eines alle Herstellungsungenauigkeiten sicher tolerierenden Ringraums zwischen dem Innenbogen und dem Mantelbogen wird der Innenbogen durch eine über Bohrungen im Mantelbogen in den Ringraum zwischen Innenbogen und Mantelbogen eingebrachte, schnell aushärtende, pastöse Masse gegenüber dem Mantelbogen radial fixiert.

Bei dieser pastösen Masse handelt es sich gemäß Patentanspruch 2 insbesondere um einen schnell aushärtenden Mehrkomponentenbeton auf Kunststoffbasis.

Eine weitere Ausführungsform wird in den Merkmalen des Patentanspruchs 4 erblickt. Danach bestehen die Außenringe sowie der Mantelbogen aus einem schweißbaren Stahl und die Innenringe sowie der Innenbogen aus Stahlguss. Als Stahlguss kommt bevorzugt ein Chromcarbidguss zur Anwendung. Da beim Chromcarbidguss Spannungsrisse nicht zu vermeiden und Innenringe aus diesem Material demzufolge sehr bruchanfällig sind, wird durch die exakte axiale Einspannung der Innenringe zwischen den Stegen und den Bördelungen sichergestellt, dass auch bei einem Material wie Chromcarbidguss, derartige Innenringe ihre Funktion vollauf erfüllen können.

Die durch die erfindungsgemäße Ausbildung entstehenden Spalte zwischen dem Innenbogen, den Innenringen und dem Mantelbogen werden in der Regel im Betrieb des Rohrbogens in kürzester Zeit durch das jeweils zu transportierende Material ausgefüllt, so dass dann der verschleißfestere Innenbogen gewissermaßen ein zusätzliches Polster als Abstützung gegenüber dem vom Material her weicheren Mantelbogen erhält.

Die Erfindung ist nachfolgend anhand von in den Zeichnungen dargestellten Ausführungsbeispielen näher erläutert. Es zeigen:
- Figur 1: im vertikalen Längsschnitt einen Rohrbogen;
- Figur 2: einen Querschnitt durch die Darstellung der Figur 1 in der Ebene II-II in Richtung der Pfeile IIa gesehen;
- Figur 3: in vergrößertem Maßstab den Ausschnitt III der Figur 1 gemäß der Erfindung.
- Figur 4: in vergrößertem Maßstab im vertikalen Längsschnitt einen Kupplungsbund des Rohrbogens der Figur 1;
- Figur 5: den Ausschnitt V der Figur 4 in vergrößertem Maßstab und
- Figur 6: den Ausschnitt VI der Figur 4 in vergrößertem Maßstab.

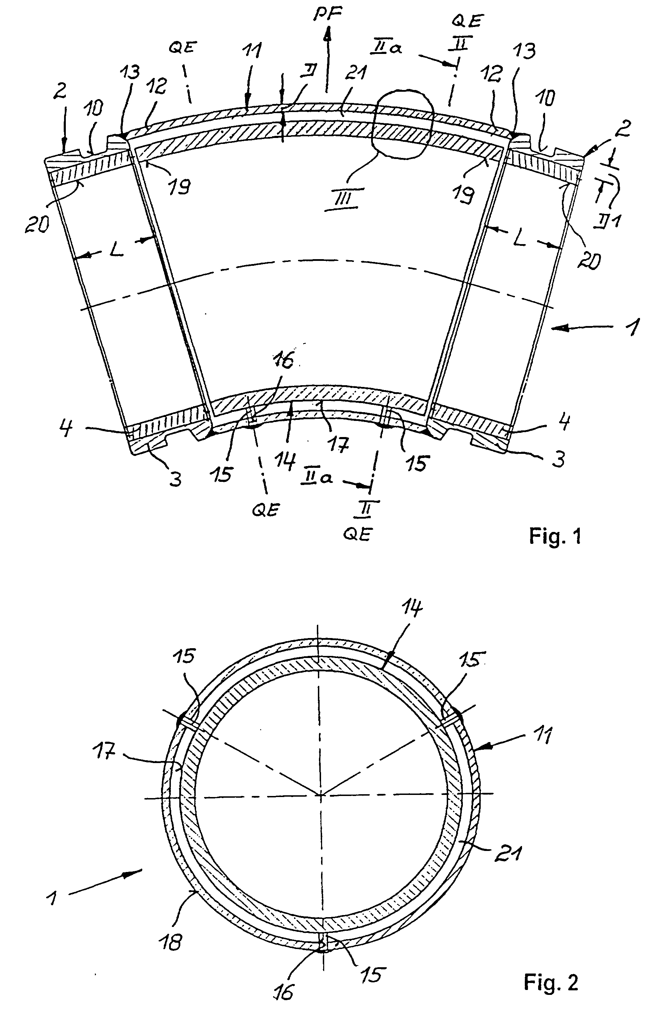

Mit 1 ist in den Figuren 1 bis 3 ein Rohrbogen als Bestandteil eines ansonsten nicht näher veranschaulichten Rohrstrangs zum Transport von Beton bezeichnet. Ein solcher Rohrbogen 1 kann beispielsweise in einen Rohrstrang eingesetzt sein, der auf Baustellen zum Transport des Betons von einem mobilen oder immobilen Betonmischer zur Stelle des Verbrauchs dient.

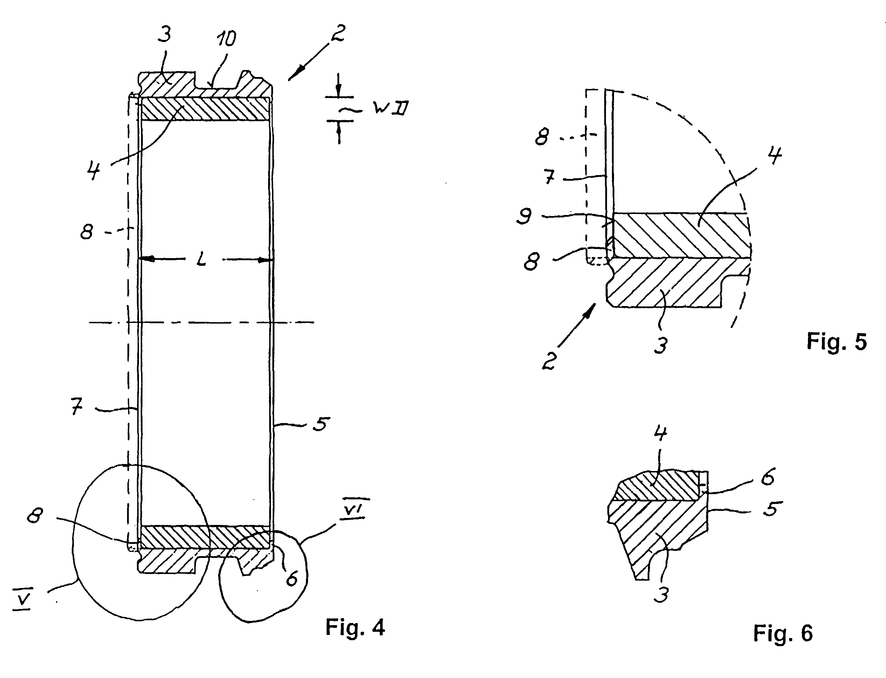

Der Rohrbogen 1 besitzt zwei endseitige Kupplungsbunde 2 aus jeweils einem Außenring 3 aus schweißbarem Stahl und einem Innenring 4 aus Stahlguss, insbesondere Chromcarbidguss. Wie in diesem Zusammenhang insbesondere die Figuren 4 bis 6 erkennen lassen, sind die Innenringe 4 in den Außenringen 3 axial lagefixiert.

Zu diesem Zweck ist an einem Stirnende 5 jedes Kupplungsbunds 2 ein nach innen gerichteter Steg 6 am Außenring 3 vorgesehen, der sich über einen Teil der Wanddicke WD der Innenringe 4 erstreckt. Am anderen Stirnende 7 jedes Kupplungsbunds 2 wird aus dem Material des Außenrings 3 bereichsweise auf dem Umfang, d.h. nasenartig, oder über den gesamten Umfang eine Bördelung 8 vorgenommen, die dann gegen die angrenzende Stirnseite 9 des Innenrings 4 anliegt und diesen gegen den Steg 6 drückt, so dass die Innenringe 4 zwischen den Stegen 6 und den Bördelungen 8 eindeutig in beide Richtungen lagefixiert sind.

Die Materialverformung der Bördelungen 8 ist in den Figuren 4 und 5 in unterbrochener Linienführung veranschaulicht.

Aufgrund der Stege 6 und der Bördelungen 8 ist die axiale Länge L der Kupplungsbunde 2 an beiden Enden des Rohrbogens 1 identisch (Figur 1). Auf diese Weise ist eine radiale Entfernung des Rohrbogens 1 in Richtung des Pfeils PF aus einem Rohrstrang und die anschließende Wiedereingliederung eines neuen Rohrbogens 1 in umgekehrter Richtung in den Rohrstrang problemlos möglich, ohne dass der Rohrstrang hierfür auseinander gezogen werden müsste.

Die Außenringe 3 besitzen umlaufende äußere Kupplungsnuten 10 (Figuren 1 und 4). In diese Kupplungsnuten 10 fassen die Schenkel von nicht näher dargestellten schalenartigen Kupplungsschellen.

Zwischen den Außenringen 3 der beiden Kupplungsbunde 2 erstreckt sich ein Mantelbogen 11 aus schweißbarem Stahl (Figur 1). Die Wanddicke D des Mantelbogens 11 ist kleiner als die Wanddicke D1 der Außenringe 3 bemessen. Die Enden 12 des Mantelbogens 11 sind durch V-Nähte 13 mit den Außenringen 3 verschweißt. Dazu sind die Außenringe 3 und der Mantelbogen 11 endseitig entsprechend konfiguriert (Figuren 4 und 6).

In den Mantelbogen 11 ist zwischen die Innenringe 4 der beiden Kupplungsbunde 2 ein Innenbogen 14 aus Stahlguss, insbesondere Chromcarbidguss, integriert (Figuren 1 und 2). Der Innenbogen 14 ist sowohl zu den Innenringen 4 als auch zum Mantelbogen 11 mit Abstand angeordnet. Dieser Abstand übersteigt die herstellungsbedingten Ungenauigkeiten aller Bestandteile des Rohrbogens 1.

Zur einwandfreien Zentrierung des Innenbogens 14 zwischen den Innenringen 4 und gegenüber dem Mantelbogen 11 dienen stählerne Distanzstifte 15 (Figuren 1 und 2), die in zwei axial zueinander versetzten Querschnittsebenen QE in jeweils 120°-Versetzung vorgesehen sind. Die Distanzstifte 15 durchsetzen Bohrungen 16 im Mantelbogen 11 und gelangen an der äußeren Oberfläche 17 des Innenbogens 14 zur Anlage. Sie werden nach der Lagefixierung des Innenbogens 14 am Außenumfang 18 des Mantelbogens 11 mit diesem verschweißt.

Die Montage des Rohrbogens 1 kann mit den nachstehend erläuterten Herstellungsschritten erfolgen:

Nach der Einzelanfertigung der Kupplungsbunde 2, des Mantelbogens 11, des Innenbogens 14 und der Distanzstifte 15 wird der Mantelbogen 11 nach einer zuvor erfolgten Integrierung des Innenbogens 14 zwischen die Außenringe 3 der Kupplungsbunde 2 eingeschweißt. Danach erfolgt eine Zentrierung des Innenbogens 14 gegenüber den Innenringen 4 der Kupplungsbunde 2 dadurch, dass die endseitigen Innenquerschnitte 19 des Innenbogens 14 mit den Innenquerschnitten 20 in den Innenringen 4 axial ausgerichtet werden. Dies kann über in der Zeichnung nicht näher veranschaulichte, stirnseitig in die Innenringe 4 einführbare Zentrierstempel erfolgen.

Nach dieser Zentrierung, die Absätze oder Stufen zwischen dem Innenbogen 14 und den Innenringen 4 vermeidet, werden die Distanzstifte 15 durch die Bohrungen 16 im Mantelbogen 11 getrieben, bis sie mit der äußeren Oberfläche 17 des Innenbogens 14 in Kontakt gelangen. Anschließend werden die Distanzstifte 15 an der äußeren Oberfläche 18 des Mantelbogens 11 durch Schweißung festgelegt und die Zentrierstempel entfernt.

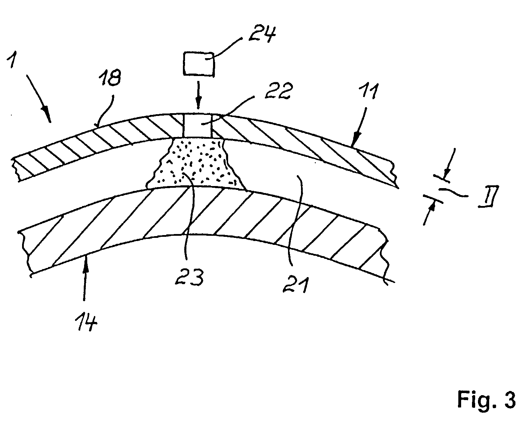

Die Figur 3 zeigt die erfindungsgemäße Ausführungsform, bei welcher die radiale Fixierung des Innenbogens 14 zum Mantelbogen 11 durch eine über Bohrungen 22 im Mantelbogen 11 in den Ringraum 21 zwischen dem Innenbogen 14 und dem Mantelbogen 11 eingebrachte schnell aushärtende pastöse Masse 23, insbesondere in Form von schnell aushärtendem Mehrkomponentenbeton auf Kunststoffbasis, erfolgt.

Bei dieser erfindungsgemäßen Ausführungsform können, wie bei dem Rohrbogen der Figuren 1 und 2, Innenbogen 14 und Mantelbogen 11 punktuell zueinander radial distanziert sein.

Nach dem Einfüllen der Masse 23 in den Ringraum 21 können die Bohrungen 22 durch, insbesondere stählerne, Einsatzstifte 24 verschlossen werden. Die Länge der Einsatzstifte 24 entspricht vorzugsweise der Wanddicke D des Mantelbogens 11. Die Einsatzstifte 24 können in die Bohrungen 22 eingepresst sein. Es ist aber auch vorstellbar, dass die Einsatzstifte 24 mit dem Mantelbogen 11 zusätzlich verschweißt werden. Dies kann durch eine Heftnaht an der Außenoberfläche 18 des Mantelbogens 11 erfolgen.

### Bezugszeichenaufstellung

- 1 -: Rohrbogen
- 2 -: Kupplungsbunde
- 3 -: Außenringe von 2
- 4 -: Innenringe von 2
- 5 -: Stirnende v. 2
- 6 -: Steg an 3
- 7 -: Stirnende v. 2
- 8 -: Bördelung an 3
- 9 -: Stirnseite v. 4
- 10 -: Kupplungsnuten an 3
- 11 -: Mantelbogen v. 1
- 12 -: Enden v. 11
- 13 -: V-Nähte
- 14 -: Innenbogen v. 1
- 15 -: Distanzstifte
- 16 -: Bohrungen f. 15
- 17 -: äußere Oberfläche v. 14
- 18 -: äußere Oberfläche v. 11
- 19 -: endseitiger Innenquerschnitt v. 14
- 20 -: Innenquerschnitt v. 4
- 21 -: Ringraum zw. 11 u. 14
- 22 -: Bohrungen in 11
- 23 -: pastöse Masse
- 24 -: Einsatzstifte
- D -: Wanddicke v. 11
- D1 -: Wanddicke v. 3
- L -: axiale Länge v. 2
- PF -: Pfeil
- QE -: Querschnittsebenen
- WD -: Wanddicke v. 4

## Patentansprüche

1. Rohrbogen als Bestandteil eines Rohrstrangs zum Transport von abrasiven Materialien, wie z.B. Sand oder Beton, welcher zwischen zwei endseitigen Kupplungsbunden (2) aus jeweils einem Außenring (3) mit einer umlaufenden äußeren Kupplungsnute (10) und einem im Außenring (3) axial lagefixierten Innenring (4) aus einem gegenüber dem Material des Außenrings (3) verschleißfesteren Material einen mit den beiden Außenringen (3) verschweißten Mantelbogen (11) mit einem Innendurchmesser besitzt, der größer als der Innendurchmesser der Außenringe (3) bemessen ist, **gekennzeichnet durch** die Kombination folgender Merkmale:
a) zwischen den beiden Innenringen (4) erstreckt sich im radialen Abstand zum Mantelbogen (11) ein umfangsseitig geschlossener Innenbogen (14);
b) der Innenbogen (14) besteht komplett aus einem gegenüber dem Material des Mantelbogens (11) verschleißfesteren Werkstoff:
c) der Innenbogen (14) ist hinsichtlich seines Innenquerschnitts (19) an beiden Enden zu den Innenquerschnitten (20) der Innenringe (4) koaxial ausgerichtet;
d) der Ringraum (21) zwischen dem Innenbogen (14) und dem Mantelbogen (11) ist mit einer schnell aushärtenden pastösen Masse befüllt.

2. Rohrbogen nach Anspruch 1, **dadurch gekennzeichnet,dass** die pastöse Masse ein Mehrkomponentenbeton auf Kunststoffbasis ist.

3. Rohrbogen nach Anspruch 1 oder 2, **dadurch gekennzeichnet, dass** jeder Innenring (4) eines Kupplungsbunds (2) zwischen einem nach innen gerichteten Steg (6) an einem Stirnende (5) des zugeordneten Außenrings (3) und einer mindestens abschnittsweise radial einwärts gerichteten Bördelung (8) am anderen Stirnende (7) eingespannt ist.

4. Rohrbogen nach einem der Ansprüche 1 bis 3, **dadurch gekennzeichnet,dass** die Außenringe (3) sowie der Mantelbogen (11) aus einem schweißbaren Stahl und die Innenringe (4) sowie der Innenbogen (14) aus Stahlguss bestehen.

## Claims

1. A pipe bend forming part of a pipeline for the transportation of abrasive materials, for example sand or cement, which, between two end coupling collars (2) each consisting of an outer ring (3) with a peripheral outer coupling groove (10) and an inner ring (4) axially fixed in position in the outer ring (3) and consisting of a material which is more resistant to wear than the material of the outer ring (3), has a jacket bend (11) which is welded to the two outer rings (3) and which has an inside diameter larger than the inside diameter of the outer rings, **characterised by** the combination of the following features:
a) a peripherally closed inner bend (14) extends between the two inner rings (4) at a radial distance from the jacket bend (11);
b) the inner bend (14) consists completely of a material which is more resistant to wear than the material of the jacket bend (11);
c) in respect of its internal cross-section (19) the inner bend (14) is coaxially aligned at both ends to the inside cross-sections (20) of the inner rings (4);
d) the annular chamber (21) between the inner bend (14) and the jacket bend (11) is filled with a quick-setting pasty material.

2. A pipe bend according to claim 1, **characterised in that** the pasty material is a plastic based multicomponent concrete.

3. A pipe bend according to claim 1 or 2, **characterised in that** each inner ring (4) of a coupling collar (2) is clamped between an inwardly directed web (6) at one end face (5) of the associated outer ring (3) and a bead (8) at the other end face (7), said bead (8) being directed radially inwards at least in portions.

4. A pipe bend according to any one of claims 1 to 3, **characterised in that** the outer rings (3) and the jacket bend (11) consist of a weldable steel and the inner rings (4) and the inner bend (14) consists of cast steel.

## Revendications

1. Coude tubulaire en tant que partie d'une suite de tubes pour le transport de matières abrasives, comme par exemple du sable ou du béton, qui, entre deux collets de couplage d'extrémité (2) constitués respectivement par une bague extérieure (3) possédant une gorge extérieure périphérique de couplage (10) et une bague intérieure (4) fixée axialement dans la bague extérieure (3) et réalisée en un matériau plus résistant à l'usure que le matériau de la bague extérieure (3), possède un coude enveloppe (11), qui est soudé aux deux bagues extérieures (3) et possède un diamètre intérieur qui est choisi supérieur au diamètre intérieur des bagues extérieures (3), **caractérisé par** la combinaison de caractéristiques suivantes:
a) un coude intérieur (14) fermé circonférentiellement s'étend entre les deux bagues intérieures (4) à une certaine distance radiale du coude enveloppe (11);
b) le coude intérieur (14) est réalisé entièrement en un matériau plus résistant à l'usure que le matériau du coude enveloppe (11);
c) le coude intérieur (14) aligné coaxialement en ce qui concerne sa section transversale intérieure (19) aux deux extrémités sur les sections transversales intérieures (20) des bagues intérieures (4);
d) l'espace annulaire (21) entre le coude intérieur (14) et le coude enveloppe (11) est rempli par une masse pâteuse qui durcit rapidement.

2. Coude tubulaire selon la revendication 1, **caractérisé en ce que** la masse pâteuse est un béton à plusieurs constituants à base de matière plastique.

3. Coude tubulaire selon la revendication 1 ou 2, **caractérisé en ce que** chaque bague intérieure (4) d'un collet de couplage (2) est serrée entre une barrette (6) dirigée vers l'intérieur, au niveau d'une extrémité frontale (5) de la bague extérieure associée (3), et un rebord (8) dirigé, au moins par endroits, radialement vers l'intérieur, sur l'autre extrémité frontale (7).

4. Coude tubulaire selon l'une des revendications 1 à 3, **caractérisé en ce que** les bagues extérieures (3) ainsi que le coude enveloppe (11) sont réalisés en un acier soudable et les bagues intérieures (4) ainsi que le coude intérieur (14) sont réalisées en fonte.
